# EUROPEAN PATENT SPECIFICATION

(11) **EP 2 662 616 B1**
(45) Date of publication and mention of the grant of the patent: **02.01.2019**
(21) Application number: 12167411.3
(22) Date of filing: 10.05.2012
(51) Int. Cl.: H01R 13/00, F21V 21/03, F21V 21/02, F21V 27/02, F21V 23/06

(54) **Luminaire socket**
Leuchtenbuchse
Douille pour luminaire

(43) Date of publication of application: 13.11.2013
(73) Proprietor: ABB Schweiz AG, 5400 Baden (CH)
(72) Inventor: Turunen, Harri, 06100 Porvoo (FI); Andersson, Johan, 06100 Porvoo (FI); Tervo, Pekka, 06100 Porvoo (FI)
(74) Representative: Kolster Oy Ab

(56) References cited:
- EP-A2- 1 109 270
- DE-U1- 20 202 688
- US-A1- 2006 108 137
- US-B1- 6 780 049
- US-B1- 7 976 338

## Description

### FIELD OF THE INVENTION

The present invention relates to a luminaire socket according to the preamble of claim 1.

### BACKGROUND ART

Luminaire sockets are used to connect luminaires into the power supply in a ceiling or wall of a room. Luminaire sockets often also comprise hooks so that the luminaire can be suspended from the hook. The luminaire is thus suspended from the ceiling through the hook in the luminaire socket and connected to the power supply in the luminaire socket.

DE patent publication 103 08 277 shows a luminaire socket to be fastened to an inclined ceiling. The luminaire socket comprises a support means being fastened to the ceiling with screws. The support means has an opening for the power cord. A hook is attached to the support means and a connector is supported at the support means. The luminaire socket comprises further a cover being attached to the inclined side surfaces of the support means. The cover has the form of a hemisphere with plane side surfaces. The cover comprises an elongated slot and a round member having an opening for the power cord and being able to move in the elongated slot between the ends of the elongated slot. The power cord is supported on the hook so that it extends vertically downwards from the supporting point and through the round member. The power cord coming from the ceiling and the power cord of the luminaire are connected in the screw connector with screws.

US patent 7,976,338 discloses a junction box comprising a top panel, a first side panel, a second side panel, a third side panel, a fourth side panel, an open bottom, and an inner cavity. The top panel of the junction box can be attached to the ceiling or wall via an attachment means. A duplex receptacle is attached to the inner cavity of the junction box. The duplex receptacle comprises a first outlet and a second outlet. The first outlet and the second outlet can engage a first plug of a light fixture or a second plug of a ceiling fan respectively. The duplex receptacle is operatively connected to a power source. The junction box may further comprise a first adapter plate attached to the junction box. The first adapter plate may secure the duplex receptacle in place against the top panel of the junction box. The first adapter plate may also function to secure a threaded tube support component, which allows a light fixture to be secured to the junction box. The bottom of the junction box remains open when the first adapter plate is in position.

The screw connectors connecting the power cords have in modern luminaire sockets been replaced by a plug outlet and a plug. The luminaire socket comprises a plug outlet and the power cord of the luminaire comprises a plug. The power cord of the luminaire is suspended with a suspension element to a hook extending downwards from the luminaire socket and the plug is connected to the plug outlet in the luminaire socket. The plug outlet is positioned in such a direction that the plug is inserted into the plug outlet in a direction perpendicular to the plane of the ceiling.

There are also luminaires on the market which comprise a cup that can be pushed on the luminaire socket in order to cover the luminaire socket. The cup can either be on the power cord of the luminaire or on a separate suspension means e.g. a metal pipe of the luminaire. The metal pipe comprises in a first end a loop e.g. a ring by which the metal pipe can be suspended from the hook of the luminaire socket. The power cord can pass through the metal pipe to the luminaire. The plug of the power cord of the luminaire is pushed into the plug outlet in a direction perpendicular to the ceiling after which the cup is pushed along the power cord or the metal pipe on the luminaire socket. The cup is then attached to the vertically extending power cord or the metal pipe by a screw extending in a horizontal direction through the lower part of the cup. The cup is in such a solution a part of the luminaire and not a part of the luminaire socket. The cup is not directly attached to the luminaire socket in any way.

There are two international standards relating to luminaire sockets i.e. IEC 61995-1 (2005-03) Devices for connection of luminaires for household and similar purposes - Part 1: General requirements and IEC 61995-2 (2009-02) Devices for connection of luminaires for household and similar purposes - Part 2: Standard sheets for DCL. These two international standards have been harmonized into European standards EN 61995-1:2008 and EN 61995-2:009. The standard sheets for DCL specify the form and dimensions of the plug outlet and the plug in rather great detail.

### BRIEF DESCRIPTION OF THE INVENTION

An object of the present invention is to achieve a luminaire socket that is easy and safe to use and compact in size.

The luminaire socket according to the invention is characterized by what is stated in the independent claim 1.

The luminaire socket comprises:
a bottom plate having a first surface and a second, opposite surface, the first surface of the bottom plate being positionable against a mounting surface,
a support member being positioned against the second surface of the bottom plate, the support member and thereby also the bottom plate being attachable with fastening means to the mounting surface,
a cup like cover being formed of two symmetrical cover parts i.e. a first cover part and a second cover part, each cover part being independently attached with fastening means to the bottom plate, whereby the first cover part covers the connection portion of the at least one outlet plug so that all electric leading non-isolated parts of the luminaire socket are shielded from accidental touching after the first cover part has been attached to the bottom plate, and
at least one plug outlet being attached to the bottom plate, said at least one plug outlet comprising a body with a nest portion and a connection portion, a first power cord being connectable to the connection portion of the plug outlet, a plug being insertable in a first direction into the nest portion of the plug outlet, said plug being connectable with a second power cord to a luminaire, wherein
the plug outlet and the plug are fully within the enclosure of the cup like cover of the luminaire socket.

The luminaire socket according to the invention is easy and safe to use and can be made compact in size due to this arrangement.

One advantageous embodiment of the invention comprises an arrangement where a first angle formed between the mounting surface and the first direction is less than 60 degrees.

The arrangement in this advantageous embodiment makes it possible to reduce the height of the cover of the luminaire socket compared to a situation where the plug outlet would be attached to the bottom plate so that the first angle i.e. the angle between the first direction and the mounting surface would be 90 degrees.

The arrangement in this advantageous embodiment makes it possible to arrange the connection portion of the outlet plug so that the wires of the first power cord can be pushed to the holes in the connection portion in a second direction i.e. in a direction towards the bottom plate. This makes the installation of the wires of the first power cord to the connection portion easier compared to a situation in which the wires of the first power cord would be pushed to the connection portion in a direction parallel to the bottom plate.

The arrangement in this advantageous embodiment makes it sensible to form the cover of two symmetrical cover parts i.e. a first cover part and a second cover part, each cover part being separately attached to the bottom plate. After the luminaire socket has been installed to the mounting surface and the first power cord has been connected to the connection portion of the plug outlet the first cover part can be attached to the bottom plate. The first cover part will cover the connection of the wires of the first power cord to the connection portion of the plug outlet. It will thus be totally safe to install the plug into the plug outlet.

### BRIEF DESCRIPTION OF THE DRAWINGS

In the following the invention will be described in greater detail by means of preferred embodiments with reference to the attached drawings, in which:
Figure 1 shows the main parts of a luminaire socket according to the invention.
Figure 2 shows the luminaire socket of figure 1 in an assembled form.

### DETAILED DESCRIPTION OF THE INVENTION

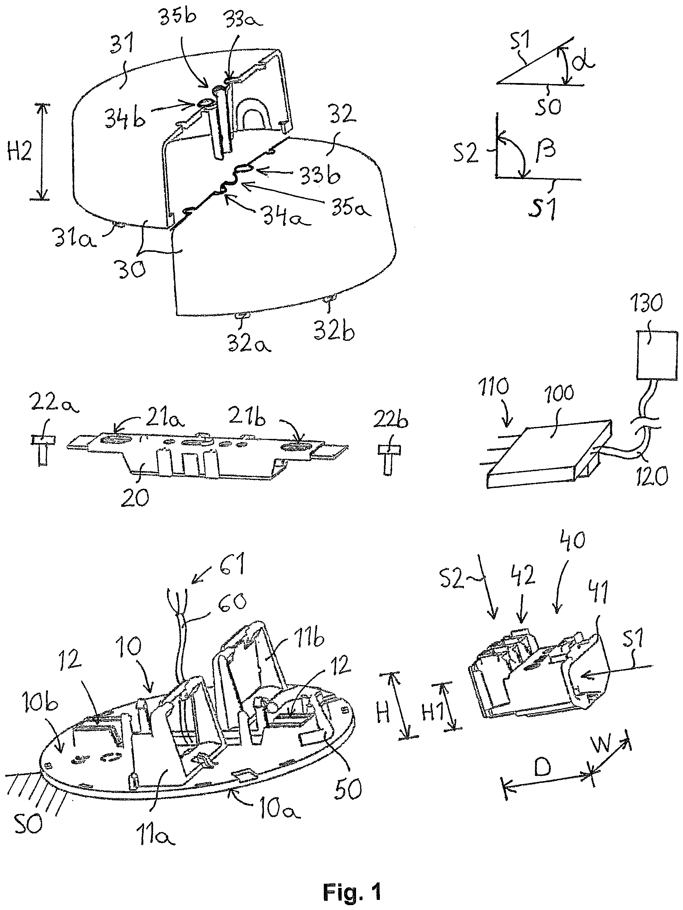

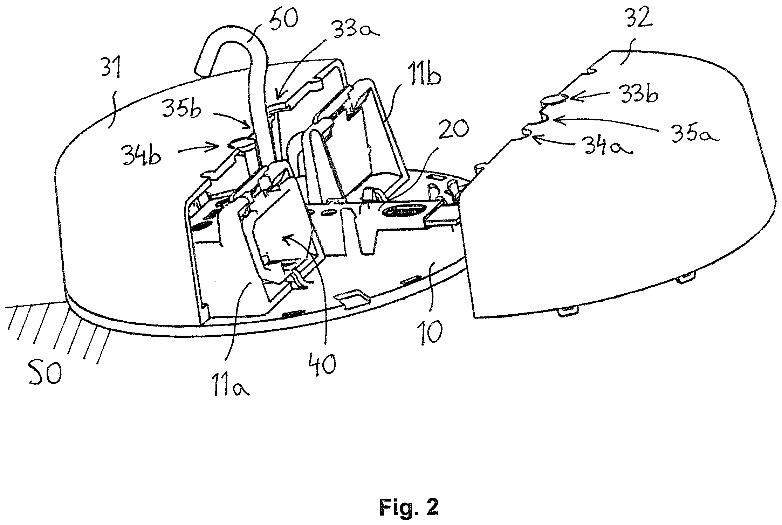

Figure 1 shows the main parts of a luminaire socket according to the invention and figure 2 shows the luminaire socket of figure 1 in an assembled form.

The luminaire socket comprises a bottom plate 10, a support member 20 a cover 30, a plug outlet 40 and a hook 50.

The bottom plate 10 comprises two installation frameworks 11a, 11b, which are firmly attached to the bottom plate 10. The installation frameworks 11a, 11b are positioned in a parallel manner on both sides of the middle portion of the bottom plate 10. The plug outlet 40 can be pushed into either installation framework 11a, 11b so that the plug outlet 40 becomes firmly attached to the installation framework 11a, 11b and to the bottom plate 10. The attachment between the plug outlet 40 and the installation framework 11a, 11b is preferably a snap attachment so that the plug outlet 40 can be easily connected to and disconnected from the installation framework 11a, 11b and the bottom plate 10. The attachment between the plug outlet 40 and the bottom plate 10 can naturally also be accomplished with some other kind of installation means e.g. with an inclined groove into which the plug outlet 40 could be pushed. The bottom plate 10 comprises further an elongated slot 12 between the installation frameworks 11a, 11b. The support member 20 can be pushed into the slot 12 so that the support member 20 becomes firmly attached with snap attachments to the bottom plate 10. The support member 20 comprises two openings 21a, 21b through which the support member 20 and thereby also the bottom plate 10 can be fastened to a mounting surface S0 with fastening members 22a, 22b e.g. screws. There are naturally corresponding openings in the slot 12 in the bottom plate 10. The screws 22a, 22b can be screwed into plugs in the mounting surface S0 or into threads in a connection box in the mounting surface S0. The mounting surface S0 can e.g. be the surface of a ceiling or the surface of a wall or the surface of some other stationary structure on which the luminaire socket is to be installed. The hook 50 is in figure 1 attached to the bottom plate 10. There is also an opening 35a, 35b in the cover parts 31, 32 for the hook 50.

Only one installation framework 11a, 11b and thereby also only one plug outlet 40 is normally used, but there are situations where two plug outlets 40 are needed. In a situation where we want to control separately a first portion and a second portion of the lamps in a luminaire 130, we need two plug outlets 40 i.e. one for the first portion of lamps and one for the second portion of lamps. Also in a situation where the luminaire 130 is controlled by a separate control wiring, we need two plug outlets 40 i.e. one for the power cord and one for the control wiring. There could naturally also be more than two installation frameworks 11a, 11b e.g. four installation frameworks on the bottom plate 10. The bottom plate 10 would have to be bigger or of a different format e.g. a polygon in order to accommodate four installation frameworks.

The plug outlet 40 comprises a body having a nest portion 41 and a connection portion 42. A plug 100 of a luminaire 130 can be pushed in a first direction S1 into the nest portion 41 of the plug outlet 40. The plug 100 has connection pins 110 which extend through holes in the bottom of the nest portion 41 into the connection portion 42. A first power cord 60 enters into the luminaire socket and is connected to the connection portion 42 of the plug outlet 40. The wires 61 of the first inlet power cord 60 are pushed into the connection portion 42 in a second direction S2 different from the first direction S1. The angle between the first direction S1 and the second direction S2 is in this embodiment 90 degrees. The plug 100 is connected to a first end of a second power cord 120. The second end of the second power cord 120 is connected to the luminaire 130.

A first angle α formed between the mounting surface S0 and the first direction S1 i.e. the pushing direction of the plug 100 is advantageously less than 60 degrees, preferably less than 45 degrees, and most preferably less than 20 degrees. It is, however, also possible that the first angle α between the mounting surface S0 and the first direction is 90 degrees. This would slightly increase the height of the cover 30.

The first power cord 60 can enter into the luminaire socket either through an opening in the bottom plate 10 or through an opening in the side surface of the cover 30. The second power cord 120 can pass out from the luminaire socket either through an opening in the cup of the cover 30 or through an opening in the side surface of the cover 30.

The plug outlet 40 could also be in a position where the first angle α formed between the mounting surface S0 and the first direction S1 i.e. the pushing direction of the plug 100 is 0 degrees. It is, however, advantageous that the first angle α is at least a little bit over 0 degrees in order to have more space within the cover 30 for the second power cord 120. The path of the second power cord 120 from the outlet plug 40 to the opening 33a, 33b; 34a, 34b in the cover 30 could also be made more smooth when the first angle α is a little bit over 0 degrees. The first angle α formed between the mounting surface S0 and the first direction S1 could thus advantageously be in the range of 5 to 60 degrees, preferably in the range of 5 to 45 degrees, and most preferably in the range of 5 to 20 degrees.

The connection portion 42 of the outlet plug 40 comprises advantageously spring loaded connections for the wires 61 of the first power cord 60. This means that the wires 61 of the first power cord 60 can just be pushed into the holes in the connection portion 42 after which the springs will lock the wires 61 of the first power cord 60 in the holes so that a firm connection is achieved to connectors in the holes. The connectors in the holes in the connection portion 42 are in contact with connectors in the holes in the bottom of the nest 41 of the outlet plug 40. The connection portion 42 could instead of spring loaded connections comprise screw loaded connections for the wires 61 of the first power cord 60, but spring loaded connections are easier and faster to use.

The cover 30 of the luminaire socket is formed of two symmetrical cover parts i.e. a first cover part 31 and a second cover part 32. Each cover part 31, 32 can thus be used in both positions. Both cover parts 31, 32 comprises snap fastening means 31a, 32a, 32b by means of which each cover part 31, 32 can be independently connected to and disconnected from the bottom plate 10. The cover parts 31, 32 could naturally also be fastened to the bottom plate 10 by some other fastening means e.g. screws, but the use of snap fastening means makes the installation of the cover parts 31, 32 to the bottom plate 10 fast and easy. The edge of each cover part 31, 32 comprises openings 33a, 33b; 34a, 34b for the second power cord 120 passing from the luminaire socket to the luminaire 130. The openings 33a, 33b; 34a, 34b are formed of an opening 33a, 34a having the form of a half circle in one of the cover parts 31, 32 and a corresponding cover plate 33b, 34b having the form of a circle in the other cover part 31, 32. When either of the cover plates 33b, 34b is removed we get an opening in the cover 30 on either side of the hook 50.

Figure 2 shows a situation where the luminaire socket has been assembled. The luminaire socket is fastened to the mounting surface S0 and ready for the plug 100 of the luminaire 130 to be connected to the luminaire socket. The plug outlet 40 has been attached to the first installation framework 11a and the first power cord 60 has been connected to the connection portion 42 of the plug outlet 40. The connection and the first power cord 60 remain under the first cover part 31 and are not shown in the figure. The installation of the luminaire socket on the mounting surface and the connection of the first power cord 60 to the connection portion 42 of the plug outlet are done by a person skilled in the art having the right to do such installations. When the first cover part 31 is attached to the bottom plate 10 the installation becomes safe. A person not skilled in the art cannot after this accidently touch any non-isolated electric leading parts of the luminaire socket i.e. the first power cord 60 and the connection portion 42 of the plug outlet 40.

The plug 100 can thus safely be inserted into the plug outlet 40 by a person not skilled in the art after which he can attach the second cover part 32 to the bottom plate 10. The plug outlet 40 and the plug 100 will thus be fully within the cover 30 and only the second power cord 120 will pass through the cover 30 to the luminaire 130. The second power cord 120 can pass either through an opening 33a, 33b; 34a, 34b formed in the connection between the two cover parts 31, 32 or through an opening formed in the side surface of the second cover part 32.

The luminaire socket can be mounted on a ceiling in which case the luminaire 130 can be suspended with any prior art suspender from the hook 50. The hook 50 extends outside the cover 30 through an opening in the cover 30 between the two cover parts 31, 32. The suspender can e.g. be attached to the second power cord 120 and comprise a loop to be put on the hook 50. Each cover part 31, 32 can comprise an opening at the edge of the cup so that the cover part 31, 32 can when it is not installed on the bottom plate 10 be suspended from the hook 50. It is naturally also possible that the luminaire 130 is suspended from the hook 50 by a separate suspension means e.g. a metal pipe. The second power cord 120 could in such case pass through the metal pipe to the luminaire 130. The second power cord 120 would in such case not take part in the suspension of the luminaire 130.

The luminaire socket can also be mounted on a wall in which case the hook 50 can be left out from the luminaire socket. The luminaire 130 could be fastened directly on the wall and the second power cord 120 would only serve to provide electric power to the luminaire 130 i.e. it would not serve as a suspension means for the luminaire 130.

The outer perimeter of the bottom plate 10 forms a circle and the traverse cross section of the support member 20 forms a rectangle. The two cover parts 31, 32 form together a cylinder with a cup. The diameter of the cylinder can be smaller at the cap compared to the diameter of the cylinder at the bottom plate 10. The invention is naturally not restricted to this form. The outer perimeter of the bottom plate 10 could e.g. be elliptical, rectangular or polygonal in which case the cover 30 must be adapted to the elliptical, rectangular or polygonal form. The cross section of the bottom plate 10 could naturally also be rectangular in which case the cover 30 must be adapted to the rectangular form. The rectangular or polygonal form is, however, not aesthetically that appealing. The inner space in a circular or elliptical form is advantageous for accommodating the wires of the power cords. The diameter of the bottom plate 10 in this embodiment is 120 mm. The height H2 of the cover 30 in this embodiment is 38 mm.

The plug outlet 40 and the plug 100 shown in the figures are in compliance with the earlier mentioned European standards EN 61995-1:2008 and EN 61995-2:009. The plug outlet 40 has a depth D, a width W and a height H. The depth D extends in the first direction S1. The depth D is the biggest dimension of the plug outlet 40. The height H1 of the nest portion 41 is smaller than the height H of the connection portion 42. The traverse cross section of the plug outlet 40 is rectangular. The dimensions of one embodiment fulfilling the above mentioned standards are as follows: The depth D is 48 mm, the width W is 36 mm, the height H is 28 mm and the height H1 of the nest portion 41 is 20 mm.

One advantage of having the plug outlet 40 attached to the installation framework 11a, 11b so that the angle α between the surface S0 and the first direction S1 i.e. the pushing direction of the plug 100 into the plug outlet 40 is less than 60 degrees, preferably less than 45 degrees, and most preferably less than 20 degrees is a more compact size of the luminaire socket. The height H2 of the cover 30 can be reduced compared to a situation where the plug outlet 40 would be attached to the bottom plate 10 so that the first direction i.e. the pushing direction S1 of the plug 100 would form a 90 degrees angle α with the surface S0.

A second advantage of this arrangement is that it makes it possible to arrange the connection portion 42 of the outlet plug 40 so that the wires 61 of the first power cord 60 can be pushed to the holes in the connection portion 42 in the second direction S2 i.e. in a direction towards the bottom plate 10. This makes the installation of the wires 61 of the first power cord 60 to the connection portion 42 easier compared to a situation in which the wires 61 of the first power cord would be pushed to the connection portion 42 in a direction parallel to the bottom plate 10.

A third advantage of this arrangement is that it makes it sensible to form the cover 30 of two symmetrical cover parts i.e. a first cover part 31 and a second cover part 32, each cover part 31, 32 being separately attached to the bottom plate 10. After the luminaire socket has been installed to the mounting surface S0 and the first power cord 60 has been connected to the connection portion 42 of the plug outlet 40 the first cover part 31 can be attached to the bottom plate 10. The first cover part 31 will cover the connection of the wires 61 of the first power cord 60 to the connection portion 42 of the plug outlet 40. It will thus be totally safe to install the plug 100 into the plug outlet 40.

The cover 30 of the luminaire socket forms the final surface of the luminaire socket. The cover 30 could thus be visible to persons in the room or the space where the luminaire 130 is installed if the cover 30 is not shielded by the luminaire 130. The hook 50 and the suspension means of the luminaire could thus also be visible to persons in the room or the space where the luminaire 130 is installed as they are outside the cover 30 if they are not shielded by the luminaire 130. In cases where the diameter of the luminaire 130 is big and the luminaire 130 is near the ceiling, the luminaire 130 will shield the cover 30, the hook 50 and the suspension means so that a person in the room or the space cannot see them.

The invention and its embodiments are not limited to the examples described above but may vary within the scope of the claims.

## Claims

1. A luminaire socket comprising:
a bottom plate (10) having a first surface (10a) and a second, opposite surface (10b), the first surface (10a) of the bottom plate (10) being positionable against a mounting surface (S0),
a support member (20) being positioned against the second surface (10b) of the bottom plate (10), the support member (20) and thereby also the bottom plate (10) being attachable with fastening means (22a, 22b) to the mounting surface (S0),
a cup like cover (30) being formed of two symmetrical cover parts i.e. a first cover part (31) and a second cover part (32), each cover part (31, 32) being independently attached with fastening means (31a, 32a, 32b) to the bottom plate (10), whereby the first cover part (31) covers the connection portion (42) of the at least one outlet plug (40) so that all electric leading non-isolated parts of the luminaire socket are shielded from accidental touching after the first cover part (31) has been attached to the bottom plate (10), and
at least one plug outlet (40) being attached to the bottom plate (10), said at least one plug outlet (40) comprising a body with a nest portion (41) and a connection portion (42), a first power cord (60) being connectable to the connection portion (42) of the plug outlet (40), a plug (100) being insertable in a first direction (S1) into the nest portion (41) of the plug outlet (40), said plug (100) being connectable with a second power cord (120) to a luminaire (130), wherein
the plug outlet (40) and the plug (100) are fully within the enclosure of the cup like cover (30) of the luminaire socket.

2. Luminaire socket according to any one of claim 1, **characterized in that** a first angle (α) formed between the mounting surface (S0) and the first direction (S1) is less than 60 degrees.

3. Luminaire socket according to claim 1, **characterized in that** a first angle (α) formed between the mounting surface (S0) and the first direction (S1) is less than 45 degrees.

4. Luminaire socket according to claim 1, **characterized in that** a first angle (α) formed between the mounting surface (S0) and the first direction (S1) is less than 20 degrees.

5. Luminaire socket according to any one of claims 1 to 4, **characterized in that** the luminaire socket comprises further a hook (50) that is attached to the support member (20) and extends outside the cover (30) through an opening (35a, 35b) in the cover (30) so that the luminaire (130) can be suspended from the hook (50).

6. Luminaire socket according to any one of claims 1 to 5, **characterized in that** the fastening means (31a, 32a, 32b) are snap fastening means (31a, 32a, 32b) by means of which each cover part (31, 32) is independently attached to the bottom plate (10).

7. Luminaire socket according to any one of claims 1 to 6, **characterized in that** the wires (61) of the first power cord (60) are inserted into the connection portion (42) of the plug outlet (40) in a second direction (S2), said second direction (S2) being different from the first direction (S1).

8. Luminaire socket according to claim 7, **characterized in that** a second angle (β) formed between the second direction (S2) and the first direction (S1) is 90 degrees.

9. Luminaire socket according to any one of claims 1 to 8, **characterized in that** the plug outlet (40) has a depth (D), a width (W) and a height (H), the depth (D) extending in the first direction (S1) and being the biggest dimension of the plug outlet (40).

10. Luminaire socket according to any one of claims 1 to 9, **characterized in that** the bottom plate (10) comprises at least one installation framework (11a, 11b) being attached to the bottom plate (10), the plug outlet (40) being attached to the at least one installation framework (11a, 11b) with a snap attachment so that the plug outlet (40) can easily be connected to and disconnected from the at least one installation framework (11a, 11b) and the bottom plate (10).

## Patentansprüche

1. Leuchtkörper-Sockel, der umfasst:
eine Bodenplatte (10), die eine erste Fläche (10a) und eine zweite, gegenüberliegende Fläche (10b) hat, wobei die erste Fläche (10a) der Bodenplatte (10) an einer Anbringungsfläche (S0) positioniert werden kann,
ein Trage-Element (20), das an der zweiten Fläche (10b) der Bodenplatte (10) positioniert ist, wobei das Trage-Element (20) und damit auch die Bodenplatte (10) mit Befestigungseinrichtungen (22a, 22b) an der Anbringungsfläche angebracht werden kann,
eine schalenförmige Abdeckung (30), die aus zwei symmetrischen Abdeckungs-Teilen, d. h. einem ersten Abdeckungs-Teil (31) und einem zweiten Abdeckungs-Teil (32), besteht, wobei jedes Abdeckungs-Teil (31, 32) unabhängig mit Befestigungseinrichtungen (31a, 32a, 32b) an der Bodenplatte (10) angebracht ist, das erste Abdeckungs-Teil (31) den Verbindungsabschnitt (42) der wenigstens einen Steckdose (40) so abdeckt, dass alle elektrisch leitenden, nicht isolierten Teile des Leuchtkörper-Sockels gegenüber unbeabsichtigter Berührung abgeschirmt sind, nachdem das erste Abdeckungs-Teil (31) an der Bodenplatte (10) angebracht worden ist, und
wenigstens eine Steckdose (40) an der Bodenplatte (10) angebracht ist, wobei die wenigstens eine Steckdose (40) einen Körper mit einem Aufnahmeabschnitt (41) und einem Verbindungsabschnitt (42) umfasst, ein erstes Stromkabel (60), das mit dem Verbindungsabschnitt (42) der Steckdose (40) verbunden werden kann, einen Stecker (100), der in einer ersten Richtung (S1) in den Aufnahmeabschnitt (41) der Steckdose (40) eingeführt werden kann, wobei der Stecker (100) mit einem zweiten Stromkabel (120) mit einem Leuchtkörper (130) verbunden werden kann, und
die Steckdose (40) und der Stecker (100) vollständig im Inneren der schalenförmigen Abdeckung (30) des Leuchtkörper-Sockels eingeschlossen sind.

2. Leuchtkörper-Sockel nach Anspruch 1, **dadurch gekennzeichnet, dass** ein erster Winkel (α), der zwischen der Anbringungsfläche (S0) und der ersten Richtung (S1) ausgebildet ist, kleiner ist als 60°.

3. Leuchtkörper-Sockel nach Anspruch 1, **dadurch gekennzeichnet, dass** ein erster Winkel (α), der zwischen der Anbringungsfläche (S0) und der ersten Richtung (S1) ausgebildet ist, kleiner ist als 45°.

4. Leuchtkörper-Sockel nach Anspruch 1, **dadurch gekennzeichnet, dass** ein erster Winkel (α), der zwischen der Anbringungsfläche (S0) und der ersten Richtung (S1) ausgebildet ist, kleiner ist als 20°.

5. Leuchtkörper-Sockel nach einem der Ansprüche 1 bis 4, **dadurch gekennzeichnet, dass** der Leuchtkörper-Sockel des Weiteren einen Haken (50) umfasst, der an dem Trage-Element (20) angebracht ist und sich durch eine Öffnung (35a, 35b) in der Abdeckung (30) so von der Abdekkung (30) nach außen erstreckt, dass der Leuchtkörper (130) an dem Haken (50) aufgehängt werden kann.

6. Leuchtkörper-Sockel nach einem der Ansprüche 1 bis 5, **dadurch gekennzeichnet, dass** die Befestigungseinrichtungen (31a, 32a, 32b) Einrast-Befestigungseinrichtungen (31a, 32a, 32b) sind, mit denen jedes Abdeckungs-Teil (31, 32) unabhängig an der Bodenplatte (10) angebracht wird.

7. Leuchtkörper-Sockel nach einem der Ansprüche 1 bis 6, **dadurch gekennzeichnet, dass** die Leiter (61) des ersten Stromkabels (60) in einer zweiten Richtung (S2) in den Verbindungsabschnitt (42) der Steckdose (40) eingeführt werden, wobei sich die zweite Richtung (S2) von der ersten Richtung (S1) unterscheidet.

8. Leuchtkörper-Sockel nach Anspruch 7, **dadurch gekennzeichnet, dass** ein zweiter Winkel (ß), der zwischen der zweiten Richtung (S2) und der ersten Richtung (S1) ausgebildet ist, 90° beträgt.

9. Leuchtkörper-Sockel nach einem der Ansprüche 1 bis 8, **dadurch gekennzeichnet, dass** die Steckdose (40) eine Tiefe (D), eine Breite (W) sowie eine Höhe (H) hat, wobei sich die Tiefe (D) in der ersten Richtung (S1) erstreckt und die größte Abmessung der Steckdose (40) ist.

10. Leuchtkörper-Sockel nach einem der Ansprüche 1 bis 9, **dadurch gekennzeichnet, dass** die Bodenplatte (10) wenigstens einen Installations-Rahmen (11a, 11b) umfasst, der an der Bodenplatte (10) angebracht ist, wobei die Steckdose (40) mit einer Einrast-Anbringung so an dem wenigstens einen Installations-Rahmen (11a, 11b) angebracht wird, dass die Steckdose (40) leicht mit dem wenigstens einen Installations-Rahmen (11a, 11b) und der Bodenplatte (10) verbunden und davon getrennt werden kann.

## Revendications

1. Douille de luminaire comprenant :
une plaque inférieure (10) ayant une première surface (10a) et une seconde surface opposée (10b), la première surface (10a) de la plaque inférieure (10) pouvant être positionnée contre une surface de montage (S0),
un élément de support (20) qui est positionné contre la seconde surface (10b) de la plaque inférieure (10), l'élément de support (20) et ainsi également la plaque inférieure (10) pouvant attachés à l'aide de moyens de fixation (22a, 22b) à la surface de montage (S0),
un couvercle de type coupe (30) qui est formé de deux parties de couvercle symétriques, à savoir une première partie de couvercle (31) et une seconde partie de couvercle (32), chaque partie de couvercle (31, 32) étant indépendamment attachée à l'aide de moyens de fixation (31a, 32a, 32b) à la plaque inférieure (10), de sorte que la première partie de couvercle (31) recouvre la partie de connexion (42) de la au moins une prise de courant (40) de sorte que toutes les parties non-isolées conductrices d'électricité de la douille de luminaire sont protégées contre un contact accidentel après avoir attaché la première partie couvercle (31) à la plaque inférieure (10), et
au moins une prise de courant (40) qui est attachée à la plaque inférieure (10), ladite au moins une prise de courant (40) comprenant un corps ayant une partie d'emboîtement (41) et une partie de connexion (42), un premier cordon d'alimentation (60) pouvant être connecté à la partie de connexion (42) de la prise de courant (40), une fiche (100) pouvant être insérée dans une première direction (S1) dans la partie d'emboîtement (41) de la prise de courant (40), la dite fiche (100) pouvant être connectée à l'aide d'un second cordon d'alimentation (120) à un luminaire (130),
la prise de courant (40) et la fiche (100) se trouvent entièrement dans l'enceinte du couvercle de type coupe (30) de la douille de luminaire.

2. Douille de luminaire selon la revendication 1, **caractérisée en ce qu'**un premier angle (α) formé entre la surface de montage (S0) et la première direction (S1) est inférieur à 60 degrés.

3. Douille de luminaire selon la revendication 1, **caractérisée en ce qu'**un premier angle (α) formé entre la surface de montage (S0) et la première direction (S1) est inférieur à 45 degrés.

4. Douille de luminaire selon la revendication 1, **caractérisée en ce qu'**un premier angle (α) formé entre la surface de montage (S0) et la première direction (S1) est inférieur à 20 degrés.

5. Douille de luminaire selon l'une quelconque des revendications 1 à 4, **caractérisée en ce que** la douille de luminaire comprend en outre un crochet (50) qui est attaché à l'élément de support (20) et s'étend à l'extérieur du couvercle (30) à travers une ouverture (35a, 35b) dans le couvercle (30) de sorte que le luminaire (130) peut être suspendu au crochet (50).

6. Douille de luminaire selon l'une quelconque des revendications 1 à 5, **caractérisée en ce que** les moyens de fixation (31a, 32a, 32b) sont des moyens de fixation à pression (31a, 32a, 32b) au moyen desquels chaque partie de couvercle (31, 32) est attachée indépendamment à la plaque inférieure (10).

7. Douille de luminaire selon l'une quelconque des revendications 1 à 6, **caractérisée en ce que** les fils (61) du premier cordon d'alimentation (60) sont insérés dans la partie de connexion (42) de la prise de courant (40) dans une seconde direction (S2), ladite seconde direction (S2) étant différente de la première direction (S1).

8. Douille de luminaire selon la revendication 7, **caractérisée en ce qu'**un second angle (β) formé entre la seconde direction (S2) et la première direction (S1) est de 90 degrés.

9. Douille de luminaire selon l'une quelconque des revendications 1 à 8, **caractérisée en ce que** la prise de courant (40) a une profondeur (D), une largeur (W) et une hauteur (H), la profondeur (D) s'étendant dans le première direction (S1) et étant la plus grande dimension de la prise de courant (40).

10. Douille de luminaire selon l'une quelconque des revendications 1 à 9, **caractérisée en ce que** la plaque inférieure (10) comprend au moins un cadre d'installation (11a, 11b) qui est attaché à la plaque inférieure (10), la prise de courant (40) étant attachée au au moins un cadre d'installation (11a, 11b) à l'aide d'une fixation à pression de sorte que la prise de courant (40) peut être facilement connectée au au moins un cadre d'installation (11a, 11b) et à la plaque inférieure (10), et facilement déconnectée de ceux-ci.
